# EUROPEAN PATENT APPLICATION

(11) **EP 4 520 598 A1**
(43) Date of publication of application: **12.03.2025**
(21) Application number: 23823076.7
(22) Date of filing: 12.06.2023
(51) Int. Cl.: B60R 16/023

(54) **ACTIVE SERVICE METHOD FOR DISEMBARKING SCENARIO, AND TERMINAL DEVICE**

(30) Priority: 14.06.2022 CN 202210674941
(71) Applicant: Huawei Technologies Co., Ltd., Shenzhen, Guangdong 518129 (CN)
(72) Inventor: REN, Duo, Shenzhen, Guangdong 518129 (CN); ZHOU, Jianhui, Shenzhen, Guangdong 518129 (CN); SONG, Kaikai, Shenzhen, Guangdong 518129 (CN)
(74) Representative: Epping - Hermann - Fischer
(86) International application number: PCT/CN2023/099677
(87) International publication number: WO 2023/241508

(57) **Abstract**

This application relates to the field of internet of vehicles technologies, and discloses a proactive service method for a get-off scenario and a terminal device, to provide a user with a proactive service for the get-off scenario via a terminal device such as an in-vehicle computer and in a manner such as voice interaction control with the user, thereby providing better vehicle use experience for the user. In the method, the terminal device detects the get-off scenario, and starts a proactive service process based on one or more recognition scenarios and a preconfigured proactive service policy, where the recognition scenario is a preconfigured scenario indicating that a user forgetting event exists in the get-off scenario. The terminal device detects a reply instruction of the user for the proactive service process, and performs proactive service control in response to the reply instruction of the user for the proactive service process. Alternatively, the terminal device determines that no reply instruction of the user for the proactive service process is detected within preset duration, and performs proactive service control, where the proactive service control is for performing intelligent control on a vehicle based on the user forgetting event.

## Description

### CROSS-REFERENCE TO RELATED APPLICATIONS

This application claims priority to Chinese Patent Application No. 202210674941.8, filed with the China National Intellectual Property Administration on June 14, 2022 and entitled "PROACTIVE SERVICE METHOD FOR GET-OFF SCENARIO AND TERMINAL DEVICE", which is incorporated herein by reference in its entirety.

### TECHNICAL FIELD

Embodiments of this application relate to the field of internet of vehicles technologies, and in particular, to a proactive service method for a get-off scenario and a terminal device.

### BACKGROUND

With increasing improvement of people's material life, increasingly more families or individuals have their own vehicles. In addition, with development of intelligent connected vehicle technologies, functions that can be implemented or developed via an in-vehicle computer gradually increase.

When people leave a vehicle, it is possible that there may be things that are not considered, such as forgetting to roll up a vehicle window or leaving an object in the vehicle. As a result, a security risk may exist, or even if people subsequently think of the situation and return to the vehicle for processing, time and energy are wasted.

Therefore, how to provide an intelligent proactive service when a user leaves a vehicle is of research significance.

### SUMMARY

Embodiments of this application provide a proactive service method for a get-off scenario and a terminal device, to provide a user with proactive services in various recognition scenarios based on the get-off scenario via a terminal device such as an in-vehicle computer through detection of various sensors or detection apparatuses on a vehicle and in a manner such as voice interaction control with the user, thereby providing better vehicle use experience for the user.

According to a first aspect, an embodiment of this application provides a proactive service method for a get-off scenario. The method includes: A terminal device detects the get-off scenario. The terminal device starts a proactive service process based on one or more recognition scenarios and a preconfigured proactive service policy, where the recognition scenario is a preconfigured scenario indicating that a user forgetting event exists in the get-off scenario. Optionally, the terminal device detects a reply instruction of a user for the proactive service process, and performs proactive service control in response to the reply instruction of the user for the proactive service process, where the proactive service control is for performing intelligent control on a vehicle based on the reply instruction. Alternatively, optionally, the terminal device determines that no reply instruction of a user for the proactive service process is detected within preset duration, and performs proactive service control, where the proactive service control is for performing intelligent control on a vehicle based on the user forgetting event.

In the method, the terminal device may interact with the user, and then implement, based on the reply instruction of the user in an interaction process, the intelligent control on the vehicle based on the one or more recognition scenarios. Alternatively, if no reply instruction of the user is received, the proactive service control may be implemented based on a default configuration. In this way, the user does not need to perform a manual operation. In addition, if the user has left the vehicle, the user does not need to return to the vehicle, so that time and energy of the user can be saved. In addition, for the plurality of recognition scenarios for the get-off scenario, the terminal device may provide different proactive services based on different proactive service policies, so that differentiated and diversified vehicle use experience may be provided for the user.

In a possible design, that the terminal device starts a proactive service process includes at least one of the following processes: The terminal device starts a voice interaction process with the user; and the terminal device displays a prompt interface.

In this design, the terminal device may provide a plurality of types of proactive service manners for the user, so that the user may learn of the provided proactive service process in a timely manner, and reply to the proactive service process conveniently.

In a possible design, that the terminal device detects a reply instruction of a user for the proactive service process includes: The terminal device detects a voice reply instruction of the user for the proactive service process; or the terminal device detects a user operation instruction of the user for the proactive service process on the prompt interface.

In this design, the user may reply to the proactive service process in a habitual reply manner, so that one or more ways may be provided for the user to respond to the proactive service process provided by the terminal device, and the proactive service control may be provided based on the reply instruction of the user.

In a possible design, if the proactive service process is the voice interaction process, that the terminal device starts a voice interaction process with the user includes: The terminal device performs voice interaction with the user based on a multi-turn conversion technology. For example, after obtaining the reply instruction of the user for the proactive service process, the terminal device may further continue to detect whether the user has another reply instruction. Optionally, if it is detected that the user instructs the terminal device to provide proactive service control for another scenario, the terminal device may continue to provide the proactive service. For example, the another reply instruction may be an instruction for turning off a vehicle light, close down a trunk, or the like.

In this design, the terminal device may provide a continuous proactive service for the user, and may further receive another open reply instruction of the user, to provide proactive service control in more scenarios for the user.

In a possible design, that the terminal device starts a proactive service process based on a plurality of recognition scenarios and a preconfigured proactive service policy includes: obtaining, from the preconfigured proactive service policy, one or more proactive service policies corresponding to the plurality of recognition scenarios; and starting the proactive service process based on the one or more proactive service policies. One proactive service policy may correspond to the plurality of recognition scenarios. In addition, when there are a plurality of proactive service policies, the proactive service process may be separately started based on each proactive service policy.

In this design, the terminal device may preconfigure a hybrid proactive service policy for at least two of the plurality of recognition scenarios, so that a more continuous proactive service process may be provided for the user, and better user experience may be provided.

In a possible design, after that a terminal device detects the get-off scenario, the method further includes: The terminal device determines a type of the get-off scenario, where the type of the get-off scenario includes a long-term leave scenario and a short-term get-off scenario. That the terminal device starts a proactive service process based on one or more recognition scenarios and a preconfigured proactive service policy includes: The terminal device starts the proactive service process based on the type of the get-off scenario, the one or more recognition scenarios, and the preconfigured proactive service policy, where a same recognition scenario corresponds to different proactive service policies in different types of the get-off scenario. In addition, some same recognition scenarios may correspond to different proactive service policies in different types of the get-off scenario. For example, for a scenario in which a vehicle window is forgotten to be rolled up, the scenario may correspond to proactive service control that the vehicle window is rolled up by default in a long-term leave scenario, and the scenario may correspond to a proactive service policy that a status of the vehicle window is maintained in a short-term get-off scenario. Alternatively, some same recognition scenarios may correspond to a same proactive service policy in different types of the get-off scenario. For example, for a scenario in which a trunk is forgotten to be closed down, the scenario may correspond to a proactive service policy that the trunk is closed down by default in both a long-term leave scenario and a short-term get-off scenario.

In this design, the terminal device may further provide a differentiated proactive service policy for the user based on different types of the get-off scenario, so that the provided proactive service may better meet various different scenarios, and then the vehicle use experience of the user may be improved.

In a possible design, when the type of the get-off scenario is a long-term leave scenario, the terminal device determines that no reply instruction of the user for the proactive service process is detected within the preset duration, and performs the proactive service control. In this design, when it is detected that the user is in the long-term leave scenario, intelligent control on the vehicle based on the user forgetting event may be provided for the user by default, so that a potential security risk can be avoided for the user.

In another possible design, when the type of the get-off scenario is a short-term get-off scenario, the terminal device detects the reply instruction of the user for the proactive service process, and performs the proactive service control in response to the reply instruction of the user for the proactive service process. In this design, when it is detected that the user is in the short-term get-off scenario, intelligent control may be performed on the vehicle based on a requirement of the user, so that the intelligent control can better meet a user habit.

In a possible design, the method further includes: if no reply instruction of the user for the proactive service process is detected by the terminal device, accumulating a quantity of times of no reply; and if the terminal device determines that the quantity of times of no reply is greater than or equal to a preset quantity-of-times threshold, determining not to start the proactive service process anymore, or not to start the proactive service process anymore within preset time.

In this design, the terminal device may further collect statistics on a habit of the user for the proactive service process. To avoid interference caused when the user is accustomed to not using the proactive service process, start of the proactive service process may be disabled, or the proactive service process may be disabled in a period of time.

In a possible design, the recognition scenario is a scenario in which a vehicle component is forgotten to be closed down. The vehicle component includes but is not limited to: a vehicle window, a trunk, or a vehicle light.

In a possible design, the one or more recognition scenarios include a scenario in which a vehicle component is forgotten to be closed down, and that the terminal device performs the proactive service control includes: The terminal device closes down an open vehicle component of the vehicle; or the terminal device closes down a specified vehicle component of the vehicle in response to the reply instruction, where the reply instruction includes an instruction instructing to close down the specified vehicle component. A scenario in which a vehicle window is forgotten to be rolled up is used as an example, and that the terminal device performs the proactive service control includes: The terminal device rolls up an open vehicle window of the vehicle; or the terminal device rolls up a specified vehicle window of the vehicle in response to the reply instruction, where the reply instruction includes an instruction instructing to roll up the specified vehicle window.

In this design, the terminal device may further perform semantic analysis on the reply instruction of the user, and perform the proactive service control instructed by the reply instruction, so that more accurate proactive service control may be provided for the user, and the vehicle use experience of the user may be improved.

In a possible design, the one or more recognition scenarios include a scenario in which a vehicle window is forgotten to be rolled up, and that the terminal device starts a proactive service process based on one or more recognition scenarios and a preconfigured proactive service policy includes: When the vehicle does not turn on a trigger switch for automatically rolling up a window, the terminal device starts the proactive service process based on the scenario in which the vehicle window is forgotten to be rolled up and the preconfigured proactive service policy.

In this design, to avoid a waste of computing resources, the terminal device starts the proactive service method for the get-off scenario provided in this application only when detecting that the user does not enable a function of automatically rolling up a vehicle window. Therefore, the user may be helped to avoid a potential security risk in various scenarios, and the vehicle use experience of the user may be improved.

In a possible design, the terminal device is an in-vehicle computer on the vehicle or a terminal device bound to the vehicle.

In this design, the method provided in this application may be implemented via an in-vehicle computer, or may be pushed to and implemented on a terminal device (for example, a mobile phone) bound to the vehicle. Optionally, during implementation of this application, when the user does not leave the vehicle (for example, it is detected that a vehicle door is open but not yet closed), the method is implemented via an in-vehicle computer; or when the user leaves the vehicle (for example, it is detected that the vehicle door was open and is already closed), the proactive service process is provided by using a mobile phone bound to the vehicle. It should be noted that the method may alternatively be implemented via an in-vehicle computer and a bound terminal device. For example, obtaining the one or more recognition scenarios and providing the proactive service control may be implemented by the in-vehicle computer, and starting the proactive service process may be implemented by the bound terminal device.

According to a second aspect, an embodiment of this application provides a proactive service apparatus for a get-off scenario. The apparatus includes but is not limited to the following functional units: a sensing module, a decision module, a voice assistant, a conversion management engine, and a display. The method in any possible design of the first aspect is performed by using a plurality of functional units.

According to a third aspect, an embodiment of this application further provides a terminal device. The terminal device includes one or more processors and one or more memories. The one or more memories are configured to store one or more computer programs and data information. The one or more computer programs include instructions, and when the instructions are executed by the one or more processors, the terminal device is enabled to perform the method in any possible design of the first aspect.

According to a fourth aspect, an embodiment of this application further provides a proactive service system for a get-off scenario, including a plurality of terminal devices according to the third aspect. The plurality of terminal devices according to the third aspect jointly perform the method according to any possible design of the first aspect.

According to a fifth aspect, an embodiment of this application provides a computer-readable storage medium. The computer-readable medium stores a computer program (which may also be referred to as code or instructions). When the computer program is run on a computer, the computer is enabled to perform the method in any possible implementation of the first aspect.

According to a sixth aspect, an embodiment of this application provides a computer program product. The computer program product includes a computer program (which may also be referred to as code or instructions). When the computer program is run, a computer is enabled to perform the method in any possible implementation of the first aspect.

According to a seventh aspect, an embodiment of this application further provides a graphical user interface on a terminal device. The terminal device has a display, one or more memories, and one or more processors. The one or more processors are configured to execute one or more computer programs stored in the one or more memories. The graphical user interface includes a graphical user interface displayed when the terminal device performs any possible implementation of the first aspect of embodiments of this application.

For beneficial effects of any one of the second aspect to the seventh aspect, refer to beneficial effects of the possible designs in the first aspect. Details are not described herein again.

### BRIEF DESCRIPTION OF DRAWINGS

FIG. 1 is a schematic of a possible hardware structure of a terminal device according to an embodiment of this application;
FIG. 2 is a block diagram of a software structure of a terminal device according to an embodiment of this application;
FIG. 3 is a diagram 1 of a display interface of a proactive service method for a get-off scenario according to an embodiment of this application;
FIG. 4 is a diagram 2 of a display interface of a proactive service method for a get-off scenario according to an embodiment of this application;
FIG. 5a is a diagram 3 of a display interface of a proactive service method for a get-off scenario according to an embodiment of this application;
FIG. 5b is a diagram 4 of a display interface of a proactive service method for a get-off scenario according to an embodiment of this application;
FIG. 6 is a diagram 5 of a display interface of a proactive service method for a get-off scenario according to an embodiment of this application;
FIG. 7 is a diagram 6 of a display interface of a proactive service method for a get-off scenario according to an embodiment of this application;
FIG. 8 is a flowchart 1 of interaction of a proactive service method for a get-off scenario according to an embodiment of this application; and
FIG. 9 is a flowchart 2 of interaction of a proactive service method for a get-off scenario according to an embodiment of this application.

### DESCRIPTION OF EMBODIMENTS

The following describes in detail embodiments of this application with reference to accompanying drawings.

Vehicles play an increasingly important role in life due to characteristics such as convenient transportation and comfort. However, because the pace of life is increasingly fast, when a user leaves a vehicle, it is possible that there may be some potential security risks and the like caused by incomplete consideration of things. For example, if the user forgets to roll up a vehicle window, there may be a risk of loss of an object in the vehicle. For another example, if the user forgets an important object or a child in the vehicle, a security risk may be caused, or time and energy need to be wasted when the user returns to the vehicle after leaving the vehicle.

In view of this, an embodiment of this application provides a proactive service method for a get-off scenario. When detecting that a user is in a get-off scenario, an in-vehicle computer on a vehicle may determine a plurality of recognition scenarios that may exist in the get-off scenario. Then, for one or more determined recognition scenarios, the in-vehicle computer may perform a corresponding proactive service for the user based on a proactive service policy and by using a multi-turn conversion technology, to provide diversified vehicle use experience for the user and provide convenience. In addition, in this application, different proactive service policies may be provided for one or more different recognition scenarios, so that differentiated service experience may be provided for the user, to better assist the user in implementing intelligent control on the vehicle. In addition, during implementation of this application, the in-vehicle computer may further implement interconnection and interworking with a terminal device such as a mobile phone, to implement proactive services in more scenarios. The proactive service may be provided in at least one of the following manners: voice interaction control, prompt interface display, and the like. The in-vehicle computer (which may also be referred to as a "vehicle-mounted computer", an "in-vehicle PC", or the like) is used as an in-vehicle terminal device, and may implement some intelligent control on the vehicle, and may further provide many convenient functions for the user. In an optional embodiment, the in-vehicle computer detects the get-off scenario and determines the plurality of recognition scenarios for the get-off scenario, so that the proactive service may be provided for the user.

In another optional embodiment, the terminal device such as the mobile phone that may implement interconnection and interworking with the in-vehicle computer may be referred to as a "bound terminal device". For example, the bound terminal device may be connected to the in-vehicle computer by logging in to a same user account or in a wired or wireless (such as Bluetooth) manner. In embodiments of this application, the in-vehicle computer may further interact with the bound terminal device, to jointly implement the proactive service method for the get-off scenario provided in this application.

It may be understood that the bound terminal device in embodiments of this application may be a device such as a mobile phone, a wearable device (for example, a band, a watch, a helmet, or an anklet), an augmented reality (augmented reality, AR)/virtual reality (virtual reality, VR) device, a tablet computer, a notebook computer, an ultra-mobile personal computer (ultra-mobile personal computer, UMPC), a netbook, a smart home device (for example, a smart television, a smart screen, or a smart speaker), or a personal digital assistant (personal digital assistant, PDA). It may be understood that a specific type of the bound terminal device is not limited in embodiments of this application, and any type of the terminal device that can implement interconnection and interworking with the in-vehicle computer is applicable to this application.

Embodiments of this application may be applied to a terminal device (for example, may include the in-vehicle computer and the bound terminal device that are described in the foregoing content). An example embodiment includes but is not limited to a portable terminal device carrying HarmonyOS^{®}, iOS^{®}, Android^{®}, Microsoft^{®}, or another operating system. Alternatively, the portable terminal device may be another portable terminal device, for example, a laptop computer (Laptop) having a touch-sensitive surface (for example, a touch panel).

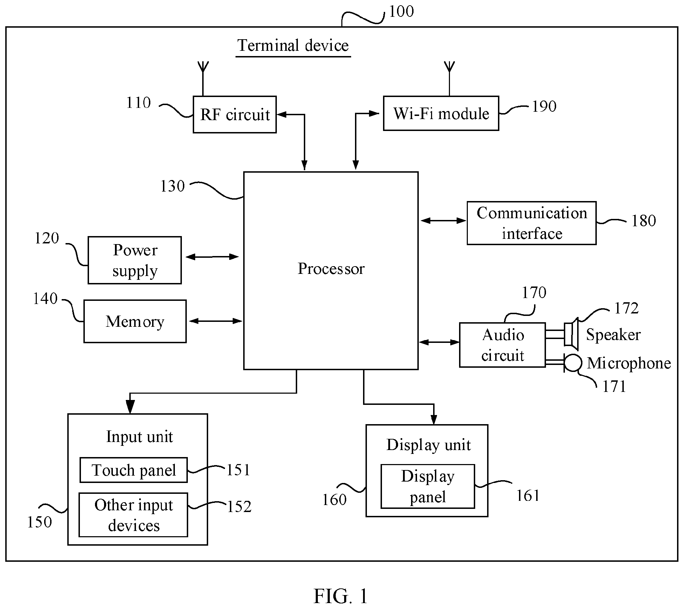

FIG. 1 is a schematic of a possible hardware structure of a terminal device. The terminal device 100 includes components such as a radio frequency (radio frequency, RF) circuit 110, a power supply 120, a processor 130, a memory 140, an input unit 150, a display unit 160, an audio circuit 170, a communication interface 180, and a wireless fidelity (wireless fidelity, Wi-Fi) module 190. A person skilled in the art may understand that the hardware structure of the terminal device 100 shown in FIG. 1 does not constitute a limitation on the terminal device 100. The terminal device 100 provided in this embodiment of this application may include more or fewer components than those shown in the figure, two or more components may be combined, or different component configurations may be used. The various components shown in FIG. 1 may be implemented in hardware including one or more signal processing and/or application-specific integrated circuits, software, or a combination of hardware and software.

The components of the terminal device 100 are specifically described below with reference to FIG. 1.

The RF circuit 110 may be configured to receive and send data in a communication or call process.

Particularly, after receiving downlink data from a base station, the RF circuit 110 sends the downlink data to the processor 130 for processing, and sends to-be-sent uplink data to the base station. Generally, the RF circuit 110 includes but is not limited to an antenna, at least one amplifier, a transceiver, a coupler, a low noise amplifier (low noise amplifier, LNA), a duplexer, and the like. In addition, the RF circuit 110 may further communicate with another device through a wireless communication network. The wireless communication may use any communication standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

A Wi-Fi technology is a short-range wireless transmission technology. The terminal device 100 may connect to an access point (access point, AP) by using the Wi-Fi module 190, to access a data network. The Wi-Fi module 190 may be configured to receive and send data in a communication process. In this embodiment of this application, if the terminal device 100 is an in-vehicle computer, the terminal device 100 may be connected to a bound terminal device (for example, a bound mobile phone) by using the Wi-Fi module 190, to implement interconnection and interworking. For example, the bound mobile phone may receive indication information from the in-vehicle computer, where the indication information indicates the bound mobile phone to use a multi-turn conversion manner to provide a proactive service or the like for a user.

The terminal device 100 may be physically connected to another device through the communication interface 180. Optionally, the communication interface 180 is connected to a communication interface of the another device through a cable, to implement data transmission between the terminal device 100 and the another device.

In this embodiment of this application, the terminal device 100 can implement a communication service. For example, if the terminal device 100 is an in-vehicle computer, the terminal device 100 may interact with a bound terminal device. Therefore, the terminal device 100 needs to have a data transmission function. That is, the terminal device 100 needs to internally include a communication module. Although FIG. 1 shows communication modules such as the RF circuit 110, the Wi-Fi module 190, and the communication interface 180, it may be understood that the terminal device 100 includes at least one of the foregoing components or another communication module (for example, a Bluetooth module) configured to implement communication, to perform data transmission.

For example, when the terminal device 100 is an in-vehicle computer, the terminal device 100 may include the RF circuit 110, and may further include the Wi-Fi module 190, or may include a Bluetooth module (not shown in FIG. 1). When the terminal device 100 is a mobile phone, the terminal device 100 may include the RF circuit 110, and may further include the Wi-Fi module 190, or may include a Bluetooth module (not shown in FIG. 1). When the terminal device 100 is a computer, the terminal device 100 may include the communication interface 180, and may further include the Wi-Fi module 190, or may include a Bluetooth module (not shown in FIG. 1). When the terminal device 100 is a tablet computer, the terminal device 100 may include the Wi-Fi module, or may include a Bluetooth module (not shown in FIG. 1).

The memory 140 may be configured to store a software program and a module. The processor 130 performs various function applications of the terminal device 100 and data processing by running the software program and the module that are stored in the memory 140. Optionally, the memory 140 may mainly include a program storage area and a data storage area. The program storage area may store an operating system (mainly including software programs or modules respectively corresponding to a kernel layer, a system layer, an application framework layer, an application layer, and the like).

**In** addition, the memory 140 may include a high-speed random access memory, and may further include a non-volatile memory, for example, at least one magnetic disk storage device, a flash memory device, or another volatile solid-state storage device.

The input unit 150 may be configured to: receive editing operations on a plurality of different types of data objects such as digital or character information entered by a user, and generate key signal input related to user settings and function control of the terminal device 100. Optionally, the input unit 150 may include a touch panel 151 and other input devices 152.

The touch panel 151, also referred to as a touchscreen, may collect a touch operation of the user on or near the touch panel 151 (such as an operation of the user on or near the touch panel 151 by using any appropriate object or accessory such as a finger or a stylus), and drive a corresponding connection apparatus based on a preset program.

Optionally, the other input devices 152 may include but are not limited to one or more of a physical keyboard, a function key (for example, a volume control button or a power button), a trackball, a mouse, a joystick, and the like.

The display unit 160 may be configured to display information entered by a user or information provided for a user, and various menus of the terminal device 100. The display unit 160 is a display system of the terminal device 100, and is configured to present an interface and implement human-computer interaction. The display unit 160 may include a display panel 161. Optionally, the display panel 161 may be configured in a form such as a liquid crystal display (liquid crystal display, LCD) or an organic light-emitting diode (organic light-emitting diode, OLED). In this embodiment of this application, if the terminal device 100 is an in-vehicle computer, the display unit 160 may be a central control display on a vehicle. For example, a prompt interface (for example, content corresponding to voice interaction control) when the in-vehicle computer provides a proactive service for a user may be displayed on the central control display.

The processor 130 is a control center of the terminal device 100 and is connected to the components through various interfaces and lines. The processor 130 runs or executes the software program and/or module stored in the memory 140, and invokes data stored in the memory 140, to perform various functions of the terminal device 100 and process data. Therefore, a plurality of services based on the terminal device 100 are implemented. In this embodiment of this application, the processor 130 is configured to implement the method provided in this embodiment of this application, to provide a proactive service for the get-off scenario for the user. In addition, the processor 130 may further provide different proactive service policies for a plurality of different recognition scenarios in which the user is in the get-off scenario, for example, different voice interaction control manners or different prompt interface content, to provide differentiated service experience for the user.

The terminal device 100 further includes the power supply 120 (such as a battery) configured to supply power to the components. Optionally, the power supply 120 may be logically connected to the processor 130 by using a power management system, to implement functions such as charging management, discharging management, and power consumption management by using the power management system.

As shown in FIG. 1, the terminal device 100 further includes the audio circuit 170, a microphone 171, and a speaker 172, and may provide an audio interface between the user and the terminal device 100. The audio circuit 170 may be configured to convert audio data into a signal that can be identified by the speaker 172, and transmit the signal to the speaker 172. The speaker 172 converts the signal into a sound signal and outputs the sound signal. The microphone 171 is configured to: collect an external sound signal (such as a sound of a person speaking, or another sound), convert the collected external sound signal into a signal that can be identified by the audio circuit 170, and send the signal to the audio circuit 170. The audio circuit 170 may be further configured to: convert the signal sent by the microphone 171 into audio data, and then output the audio data to the RF circuit 110 for sending to, for example, another terminal device, or output the audio data to the memory 140 for subsequent further processing. In this embodiment of this application, when implementing the proactive service, the terminal device 100 may provide voice interaction control for the user by using the audio circuit 170, the microphone 171, and the speaker 172. For example, the terminal device 100 may send a first voice instruction to the user by using the speaker 172, and may further receive a first voice reply instruction of the user by using the microphone 171, so that the first voice reply instruction of the user may be converted into audio data by using the audio circuit 170, to analyze the first voice reply instruction of the user. In addition, a next turn of voice interaction with the user may be further continued based on the first voice reply instruction until a proactive service process of the terminal device 100 is completed. For example, audio data for sending a second voice instruction may be generated, and after the audio data is converted into the second voice instruction by using the audio circuit 170, the second voice instruction is sent to the user, and a second voice reply instruction of the user may be further received.

Although not shown, the terminal device 100 may further include at least one sensor, a camera, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is most basic system software running on the terminal device 100. A software system of the terminal device 100 may use a layered architecture, an event-driven architecture, a microkernel architecture, a micro service architecture, or a cloud architecture. In this embodiment of this application, an operating system of a layered architecture is used as an example to describe a software structure of the terminal device 100.

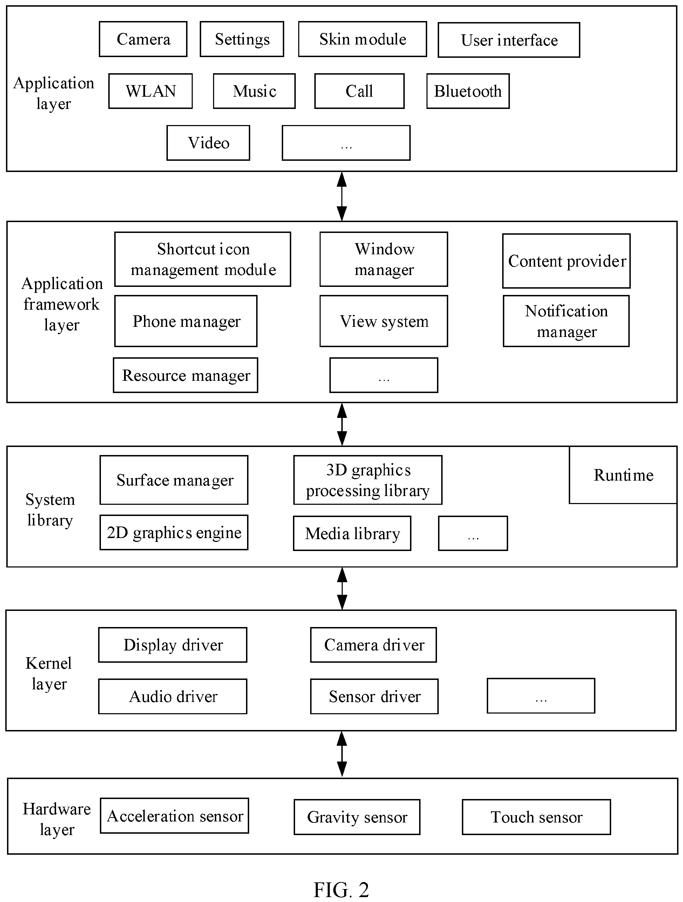

FIG. 2 is a block diagram of a software structure of a terminal device according to an embodiment of this application. As shown in FIG. 2, the software structure of the terminal device may be a layered architecture. For example, software may be divided into several layers, and each layer has a clear role and responsibility. The layers communicate with each other through a software interface. In some embodiments, an operating system is divided into five layers: an application layer, an application framework (framework, FWK) layer, runtime and a system library, a kernel layer, and a hardware layer from top to bottom.

The application layer may include a series of application packages. As shown in FIG. 2, the application layer may include Camera, Settings, a skin module, a user interface (user interface, UI), a third-party application, and the like. The third-party application may include WLAN, Music, Call, Bluetooth, Video, a voice assistant, and the like. In this embodiment of this application, the application layer may include an application package for determining a recognition scenario and make a decision on a proactive service, and may further include an application package (for example, a voice assistant) for implementing voice interaction control, and the like.

In a possible implementation, the application may be developed by using a Java language, and is completed by invoking an application programming interface (application programming interface, API) provided by the application framework layer. A developer may interact with a bottom layer (for example, the hardware layer or the kernel layer) of the operating system by using the application framework layer, to develop an application of the developer. The application framework layer mainly includes a series of services and management systems of the operating system.

The application framework layer provides an application programming interface and a programming framework for an application of the application layer. The application framework layer includes some predefined functions. As shown in FIG. 2, the application framework layer may include a shortcut icon management module, a window manager, a content provider, a view system, a phone manager, a resource manager, a notification manager, and the like.

The shortcut icon management module is configured to manage a shortcut icon displayed on the terminal device, for example, create the shortcut icon, remove the shortcut icon, and monitor whether the shortcut icon meets a display condition.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying text and a control for displaying a picture. The view system may be configured to construct an application. A display interface may include one or more views. For example, a display interface including an SMS message notification icon may include a view for displaying text and a view for displaying a picture.

The phone manager is configured to provide a communication function of the terminal device, for example, management of a call status (including answering, declining, or the like).

The resource manager provides various resources such as a localized character string, an icon, a picture, a layout file, and a video file for an application.

The notification manager enables an application to display notification information in the status bar, and may be configured to convey a notification message. The displayed notification information may automatically disappear after a short stay without user interaction. For example, the notification manager is configured to notify download completion, provide a message notification, and the like. The notification manager may alternatively be a notification that appears in a top status bar of the system in a form of a graph or scroll bar text, for example, a notification of an application running in background, or may be a notification that appears on a screen in a form of a conversion window. For example, text information is displayed in the status bar, a prompt tone is played, the terminal device vibrates, or an indicator light blinks.

In some embodiments of this application, the application framework layer is mainly responsible for invoking a service interface for communicating with the hardware layer, to transfer an operation request for performing an operation by a user to the hardware layer. The operation request may include adding an emergency contact by the user by using the display unit 160, and the like.

The runtime includes a kernel library and a virtual machine. The runtime is responsible for scheduling and management of the operating system.

The kernel library includes two parts: One part is a function that needs to be invoked in a Java language, and the other part is a kernel library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection. The system library may include a plurality of functional modules, for example, a surface manager (surface manager), a media library (media libraries), a three-dimensional (3D) graphics processing library (for example, OpenGL ES), and a two-dimensional (2D) graphics engine (for example, SGL).

The surface manager is configured to: manage a display subsystem and provide fusion of a 2D layer and a 3D layer for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In some embodiments, the three-dimensional graphics processing library may be configured to draw a three-dimensional motion trajectory image, and the 2D graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors, such as an acceleration sensor, a gravity sensor, and a touch sensor.

Generally, the terminal device 100 may run a plurality of applications simultaneously. In a simple manner, one application may correspond to one process. In a complex manner, one application may correspond to a plurality of processes. Each process has a process identity (process ID). With reference to the description of the hardware structure of the terminal device in FIG. 1 and the description of the software framework of the terminal device in FIG. 2, the following describes, with reference to a plurality of embodiments and accompanying drawings by using examples, working principles of software and hardware that are used by the terminal device to perform the proactive service method for the get-off scenario provided in embodiments of this application.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In addition, it should be understood that terms such as "first" and "second" in the descriptions of this application are merely used for differentiated description, and shall not be understood as an indication or implication of relative importance or an indication or implication of an order.

It should be understood that the hardware structure of the terminal device may be shown in FIG. 1, and the software architecture may be shown in FIG. 2. A software program and/or a module corresponding to the software architecture of the terminal device may be stored in the memory 140. The processor 130 may run the software program and the application stored in the memory 140, to perform a process of the proactive service method for the get-off scenario provided in embodiments of this application.

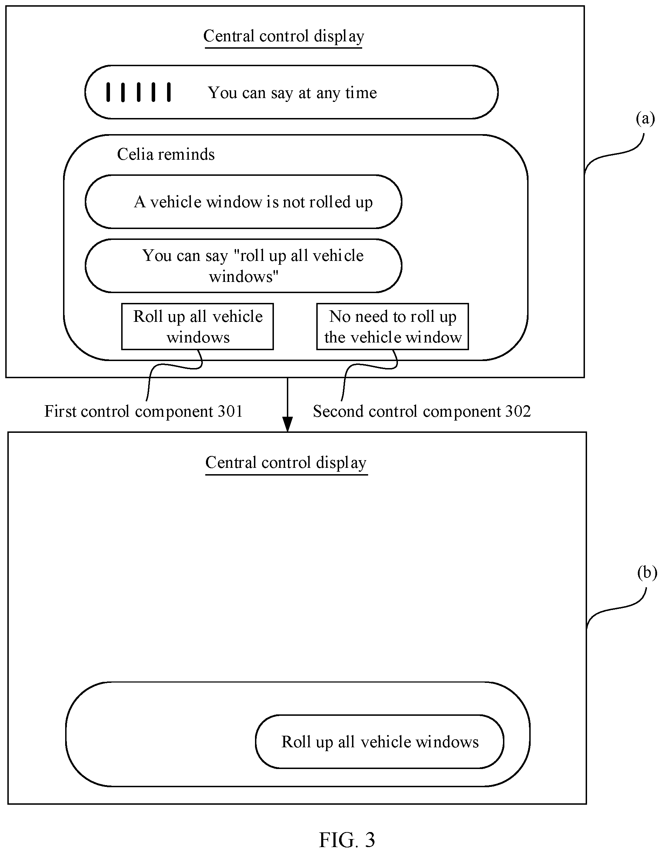

For ease of understanding of the proactive service method for the get-off scenario provided in this application, the following describes, with reference to content shown in FIG. 3 to FIG. 9, an implementation process of the method provided in this application.

First, several possible scenarios applied to embodiments of this application are described. In embodiments of this application, when it is detected that a user is in a get-off scenario, a plurality of recognition scenarios may be further detected or determined. In addition, different corresponding proactive service policies may be provided for the user based on different recognition scenarios. In this way, diversified and differentiated user experience may be provided for the user. It should be noted that, in the following embodiments, an in-vehicle computer is used as an execution body for description, but embodiments of this application are not limited to being implemented by the in-vehicle computer. Alternatively, embodiments of this application may be implemented by any possible terminal device (for example, a mobile phone), or may be jointly implemented by the in-vehicle computer and a bound terminal device related to the in-vehicle computer (for example, the in-vehicle computer and a bound mobile phone thereof). This is not limited in this application.

Scenario A: A scenario in which a vehicle window is forgotten to be rolled up. The scenario in which a vehicle window is forgotten to be rolled up is used as an example. In embodiments of this application, the in-vehicle computer may sense a vehicle window status when detecting that the user is in the get-off scenario. For example, the in-vehicle computer may obtain the vehicle window status via a related sensor of the vehicle window. For another example, the in-vehicle computer may alternatively perform image recognition on a captured image including the vehicle window, to obtain the vehicle window status.

In embodiments of this application, if it is sensed that the vehicle window is in an open state (that is, the scenario in which a vehicle window is forgotten to be rolled up exists), a proactive service process for the get-off scenario may be triggered. For example, the proactive service process may include at least one of manners such as a voice interaction control process and prompt interface display. Based on a proactive service in this scenario, when the user has a requirement, a voice reply instruction of the user or a manual operation on a prompt interface is received, and in response to the instruction or the operation, control and assistance for the user in rolling up the vehicle window that is forgotten to be rolled up is performed, so that a user operation of manually rolling up the vehicle window is avoided. Even if the user has left the vehicle, the user does not need to return to the vehicle again to perform manual control. Therefore, time and energy of the user can be saved, and vehicle use experience of the user can be improved.

For example, voice interaction control triggered by the in-vehicle computer may be sending, to the user, a first voice instruction for determining whether to roll up the vehicle window that is forgotten to be rolled up. For example, the first voice instruction may be "A vehicle window is not rolled up" and "You can say 'roll up all vehicle windows'". Then, if the user sends a first voice reply instruction for the first voice instruction, the in-vehicle computer may receive the first voice reply instruction, and in response to the first voice reply instruction, determine to roll up the vehicle window that is forgotten to be rolled up or determine that there is no need to roll up the vehicle window that is forgotten to be rolled up. For example, the first voice reply instruction may be "Roll up all vehicle windows", and the in-vehicle computer may control, by performing semantic analysis on the first voice reply instruction, to roll up all vehicle windows on the vehicle. It should be noted that, in embodiments of this application, voice interaction between the in-vehicle computer and the user is not limited to one turn, and a plurality of turns of voice interaction may be performed based on an actual scenario. For example, the in-vehicle computer may further send a second voice instruction to the user, and the second voice instruction may be for querying another component that is of the vehicle and that is forgotten to be closed, for example, a trunk that is forgotten to be closed down. Alternatively, for example, a voice assistant may still be in a voice awake state after the in-vehicle computer receives the first voice reply instruction of the user. If another reply instruction of the user is received within preset duration, a second turn of voice interaction may continue, and corresponding control may be performed based on the another reply instruction of the user. For example, the another reply instruction may be querying today's weather. After performing query, the in-vehicle computer may indicate today's weather to the user via a second voice instruction. It should be further noted that, during implementation of this application, a specific voice instruction used in the voice interaction control and specific display content in the prompt interface are not limited, and may be prestored, or may be automatically generated based on a preset model, or the like.

In addition, the in-vehicle computer may further display the prompt interface such as a prompt pop-up window or a prompt card on a central control display, and may further display, on the prompt pop-up window, control components indicating a plurality of control manners (where for example, the control components may include a first control component for rolling up all vehicle windows, and a second control component indicating that there is no need to roll up the vehicle window that is forgotten to be rolled up, and may further include a third control component for closing the prompt interface such as the prompt pop-up window). For example, FIG. 3 is a diagram of a display interface of a voice interaction control method in a get-off scenario according to an embodiment of this application. As shown in (a) in FIG. 3, the in-vehicle computer may provide a prompt interface for the user based on a proactive service policy. Content displayed on the central control display of the in-vehicle computer may include prompt content corresponding to a voice instruction that is in a voice interaction control process. For example, the prompt content may be "A vehicle window is not rolled up" and "You can say 'roll up all vehicle windows'"; a first control component 301; a second control component 302; a voice receiving bar that prompts the user to perform voice reply; and the like. As shown in (b) in FIG. 3, the user may receive a proactive service of the in-vehicle computer by listening to the voice instruction from the in-vehicle computer or viewing the prompt interface on the central control display. In addition, the in-vehicle computer may determine a subsequent proactive service process by receiving a voice reply instruction "Roll up all vehicle windows" that is sent by the user, or by detecting a user operation that the user taps the first control component 301 or the second control component 302 shown in (a) in FIG. 3. It may be understood that FIG. 3 is merely a possible example, and is not intended to limit the prompt content of the prompt interface or voice content of the voice interaction control provided in embodiments of this application. In addition, the voice content of the voice interaction control may correspond to or be similar to text content on the prompt interface.

For another example, when detecting that the user is in the get-off scenario, the in-vehicle computer may alternatively instruct the triggered voice interaction control process to a bound terminal device (for example, a mobile phone) for processing. For example, the mobile phone sends the first voice instruction, and receives the first voice reply instruction of the user. Then, after performing semantic analysis on the first voice reply instruction, the mobile phone instructs an intended control manner of the user to the in-vehicle computer, and the in-vehicle computer controls the vehicle in the intended control manner. In this way, the proactive service can be further implemented through interaction between the in-vehicle computer and the mobile phone when the user has left the vehicle, to avoid a case in which the user cannot obtain the proactive service of the in-vehicle computer in a timely manner because the user has left the vehicle.

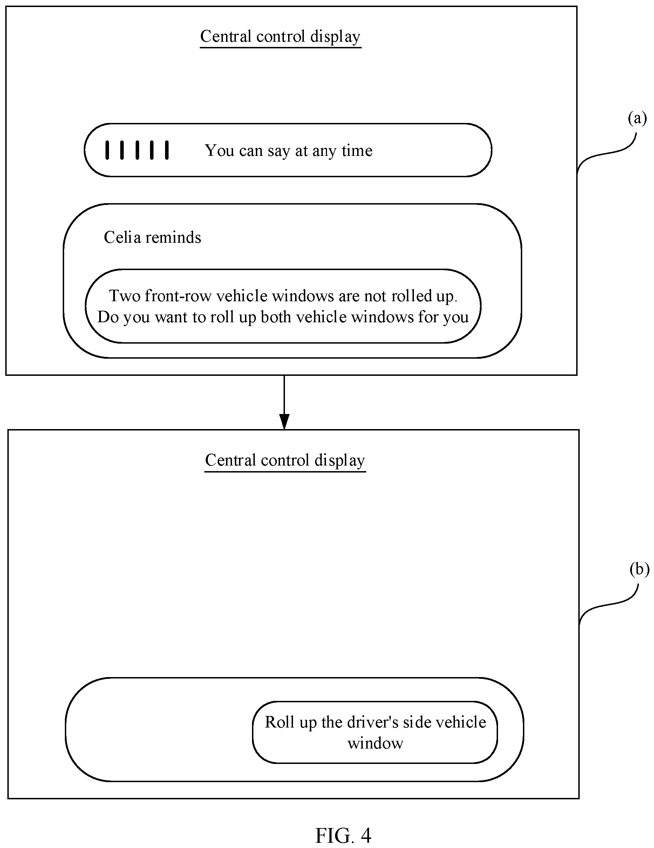

The vehicle windows may include a driver's side vehicle window, a passenger's side vehicle window, a rear-row left vehicle window, a rear-row right vehicle window, a sunroof, and the like. In embodiments of this application, when sending the first voice instruction to the user, the in-vehicle computer or the bound terminal device may further indicate a specific vehicle window location. For example, it is assumed that the driver's side vehicle window and the passenger's side vehicle window are not rolled up, the first voice instruction may be "Two front-row vehicle windows are not rolled up, and do you want to roll up both vehicle windows for you". The user may send different first voice reply instructions based on an actual scenario. For example, the first voice reply instruction may be "Roll up both vehicle windows", "Roll up the driver's side vehicle window", or "Roll up the passenger's side vehicle window". FIG. 4 is a diagram of another display interface of a voice interaction control method in a get-off scenario according to an embodiment of this application. (a) in FIG. 4 shows prompt content provided by the in-vehicle computer based on the proactive service policy. (b) in FIG. 4 shows a possible voice reply instruction of the user, namely, an example in which the first voice reply instruction is "Roll up the driver's side vehicle window". For a prompt interface that is when the first voice reply instruction is another example, refer to the example.

In an optional embodiment, in embodiments of this application, a type of the get-off scenario which the user is in may be further detected. In different types of the get-off scenario, the in-vehicle computer may provide different proactive service policies. It should be noted that different proactive service policies may correspondingly store different voice interaction control manners and/or different display content of the prompt interface, and the like. For example, the following scenarios may be included:
Scenario A1: long-term leave scenario. For example, if a scenario in which the user needs to stay for a long time, such as going home, arriving at an office place, or arriving at a shopping mall is detected, the scenario may be identified as a long-term leave scenario. For example, the in-vehicle computer may determine a parking area of the user by positioning a location of the vehicle, and may further determine a type of the get-off scenario of the user with reference to current time information. For example, if the current time is 5:30 p.m. to 10:00 p.m. on a working day, it may be considered that a weight of the type of the get-off scenario being the long-term leave scenario is great. In addition, statistics may be further collected on information such as detection information and a monitoring result of a historical long-term leave scenario, to automatically generate a vehicle use habit of the user, to improve accuracy of subsequently providing the proactive service for the user in the get-off scenario. For example, a time period range of the user going home from work may be generated, to improve determining accuracy when the type of the get-off scenario is determined.

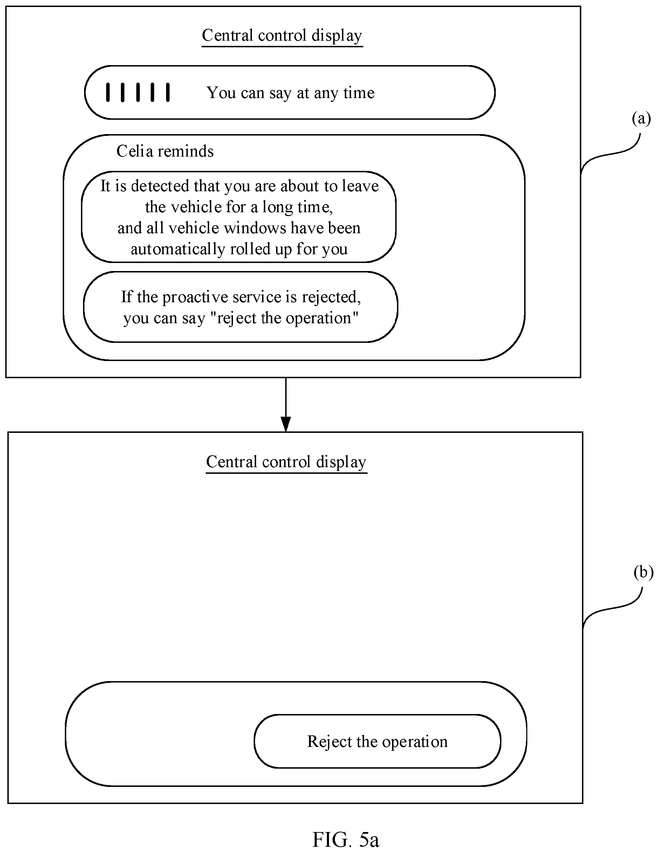

In embodiments of this application, if it is further detected that the user is in the long-term leave scenario, to avoid a potential security risk, the provided proactive service policy may be automatically rolling up all vehicle windows, and may send a reminder to the user in a manner such as a voice instruction and/or a prompt pop-up window. For example, the in-vehicle computer may send a first voice instruction with the following content to the user: "It is detected that you are about to leave the vehicle for a long time, and all vehicle windows have been automatically rolled up for you" and "If the proactive service is rejected, you can say 'reject the operation'". Optionally, if the user rejects the proactive service policy, the proactive service may be further blocked by using a voice reply instruction and/or a tap operation on the prompt pop-up window. For example, the user may send a first voice reply instruction with content being "Reject the operation" to the in-vehicle computer. In addition, if the in-vehicle computer recognizes an indication that the user rejects the proactive service in a scenario in which the operation has been performed, the scenario before the operation is performed is resumed. FIG. 5a is a diagram of still another display interface of the voice interaction control method in the get-off scenario according to an embodiment of this application. (a) in FIG. 5a shows prompt content provided by the in-vehicle computer based on the proactive service policy. (b) in FIG. 5a shows a possible voice reply instruction of the user, namely, an example in which the first voice reply instruction is "Reject the operation". For a prompt interface that is when the first voice reply instruction is another example, refer to the example.

In an optional embodiment, the in-vehicle computer may alternatively determine, with reference to one or more pieces of detection information of one or more bound terminal devices, that the user is in the long-term leave scenario. For example, the in-vehicle computer may alternatively receive positioning detection information actively or passively sent by a mobile phone. The positioning detection information indicates that the mobile phone is located in a target area range, and the target area range may be a prestored area range (for example, a parking lot of a community in which a home is located, a parking lot of a company, or a parking lot of a shopping mall determined with reference to a map). For example, the in-vehicle computer may alternatively receive power-on detection information actively or passively sent by a bound computer. The power-on detection information indicates that the bound computer is powered on, and may also increase a weight that the user is in a long-term away-from-home scenario. It may be understood that the in-vehicle computer may configure different weight factors for the one or more bound terminal devices; then determine a weight value based on one or more pieces of detection information of each bound terminal device; and obtain, based on the weight value and the weight factors, a comprehensive weight value that the vehicle is in the long-term leave scenario.

Scenario A2: short-term get-off scenario. For example, if a scenario in which the user stays for short time, such as arriving at a gas station or a nucleic acid testing place is detected, the scenario may be identified as a short-term get-off scenario. For example, the in-vehicle computer may determine a parking area of the user by positioning a location of the vehicle. In addition, the in-vehicle computer may alternatively determine the type of the get-off scenario of the user with reference to other information. For example, the other information may be current time information.

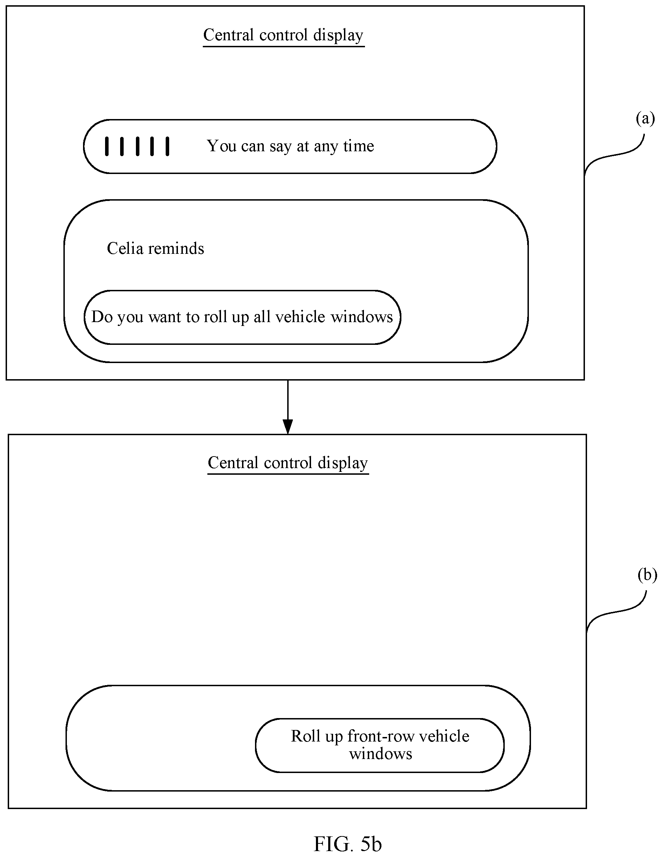

In embodiments of this application, if it is further detected that the user is in the short-term get-off scenario, to avoid a potential security risk and avoid that the proactive service policy does not meet a user requirement, the provided proactive service policy may be: first soliciting an opinion from the user by using a voice instruction and/or a prompt pop-up window, and then executing a corresponding proactive service policy based on a voice reply instruction and/or a tap operation on the prompt pop-up window. For example, the in-vehicle computer may send, to the user, a first voice instruction with content being "Do you want to roll up all vehicle windows". If the user sends, to the in-vehicle computer, a first voice reply instruction with content being "Yes", or the like, the in-vehicle computer executes, based on the first voice reply instruction, a proactive service policy of rolling up all vehicle windows; or if the user sends, to the in-vehicle computer, a first voice reply instruction with content being "No", or the like, the in-vehicle computer executes, based on the first voice reply instruction, a proactive service policy of maintaining a current status of the vehicle windows. Alternatively, the user may send, to the in-vehicle computer, a first voice reply instruction with content being "Roll up front-row vehicle windows", "Roll up the vehicle window by half", or the like, and the in-vehicle computer may further execute, based on the first voice reply instruction, a proactive service policy for implementing the user requirement. FIG. 5b is a diagram of still another display interface of the voice interaction control method in the get-off scenario according to an embodiment of this application. (a) in FIG. 5b shows prompt content displayed by the in-vehicle computer based on the proactive service policy. (b) in FIG. 5b shows a possible voice reply instruction of the user, namely, an example in which the first voice reply instruction is "Roll up front-row vehicle windows". For a prompt interface that is when the first voice reply instruction is another example, refer to the example.

It should be noted that, in this scenario, the scenario in which a vehicle window of the vehicle is forgotten to be rolled up is used as an example. For a scenario in which another component of the vehicle is forgotten to be closed, refer to the descriptions of the scenario in which a vehicle window of the vehicle is forgotten to be rolled up. Details are not described again in this application. The scenario in which another component is forgotten to be closed may be, for example, a scenario in which a trunk is forgotten to be closed down or a scenario in which a vehicle light is forgotten to be turned off. Compared with a related technology in which a reminder can be sent only by using a voice, an alarm sound, or the like, the user needs to return to the vehicle to perform a manual operation, and a proactive service cannot be provided, embodiments of this application may implement some implementable intelligent control on the vehicle based on a voice reply instruction of the user in a proactive service manner such as voice interaction control, so that time and energy of the user can be saved, and convenience can be provided for the user.

Scenario B: scenario in which a mobile phone or a child is forgotten. In embodiments of this application, when detecting that the user is in the get-off scenario, the in-vehicle computer may sense whether a mobile phone or a child is in the vehicle. For example, on the basis of recognizing the get-off scenario, the in-vehicle computer may detect, based on wireless charging, wired charging, Bluetooth connection, or the like, that the mobile phone is still left in the vehicle, and may determine that a scenario in which a mobile phone is forgotten is detected. For another example, on the basis of recognizing the get-off scenario, the in-vehicle computer may detect, based on information such as a child seat belt switch and a child seat pressure sensor, that the child is still in the vehicle, and determine that a scenario in which a child is forgotten is detected.

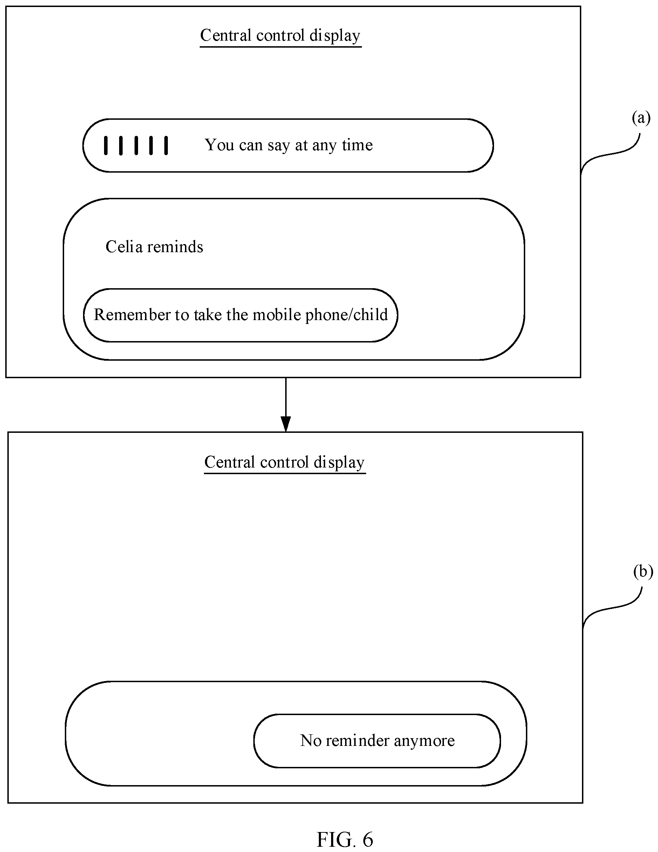

In embodiments of this application, if the scenario in which a mobile phone is forgotten or the scenario in which a child is forgotten is detected, voice interaction control may be triggered, to send a reminder to the user, so that the user is assisted in leaving the vehicle, and a reduction in user experience caused by a need to return to the vehicle due to an unconsidered event is avoided. For example, the voice interaction control triggered by the in-vehicle computer may be sending, to the user, a first voice instruction for reminding that the mobile phone or the child is forgotten. For example, the first voice instruction may be "Remember to take the mobile phone/child". Optionally, the in-vehicle computer may receive and respond to a first voice reply instruction sent by the user. For example, the first voice reply instruction may be "No reminder anymore", and the in-vehicle computer may no longer trigger a proactive service process for the scenario in which a mobile phone is forgotten or the scenario in which a child is forgotten by performing semantic analysis on the first voice reply instruction. FIG. 6 is a diagram of still another display interface of the voice interaction control method in the get-off scenario according to an embodiment of this application. (a) in FIG. 6 shows prompt content provided by the in-vehicle computer based on the proactive service policy. (b) in FIG. 6 shows a possible voice reply instruction of the user, that is, an example in which the first voice reply instruction is "No reminder anymore". In this case, the in-vehicle computer may record a user habit that the user does not need the proactive service.

In addition, in this scenario, a type of the get-off scenario which the user is in may be further detected. In different types of the get-off scenario, the in-vehicle computer may also provide different proactive service policies. For example, if it is detected that the user is in a long-term leave scenario, a proactive service process for the mobile phone forgetting scenario or the child forgetting scenario is provided for the user; or if it is detected that the user is in a short-term get-off scenario, a proactive service process for the mobile phone forgetting scenario or the child forgetting scenario may not be provided for the user.

Scenario C: hybrid recognition scenario of a plurality of recognition scenarios. For example, the in-vehicle computer may separately detect or determine various possible recognition scenarios by using a plurality of different processes, and may detect or determine that there are a plurality of recognition scenarios. For example, a scenario in which a vehicle window is forgotten to be rolled up and a scenario in which a mobile phone is forgotten may be detected at the same time. In embodiments of this application, a personalized hybrid proactive service policy may be matched for the hybrid recognition scenario, or proactive service policies for various recognition scenarios may be triggered one by one.

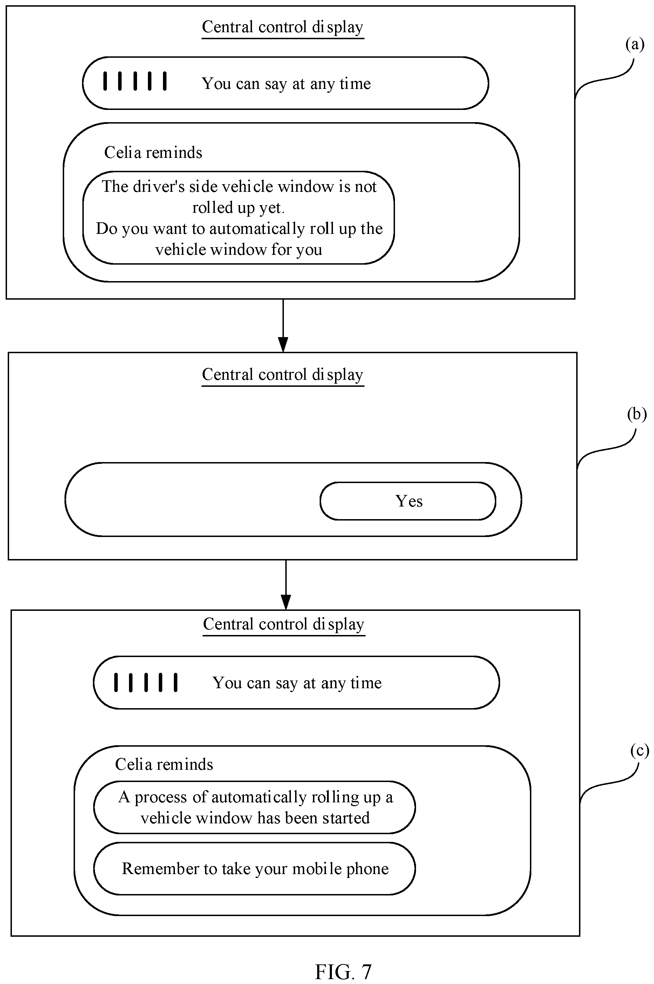

The hybrid recognition scenario of the scenario in which a vehicle window is forgotten to be rolled up and the scenario in which a mobile phone is forgotten is used as an example. Optionally, a voice interaction control process triggered by the in-vehicle computer based on a proactive service policy may be sending, to the user, a first voice instruction for determining whether to roll up the vehicle window and take the mobile phone. For example, the first voice instruction may be "The driver's side vehicle window is not rolled up yet, and remember to roll up the window and take the mobile phone". Then, if a first voice reply instruction sent by the user for the first voice instruction is "Help me roll up all vehicle windows", the in-vehicle computer may control, by performing semantic analysis on the first voice reply instruction, to roll up all vehicle windows on the vehicle. Alternatively, optionally, the voice interaction control process triggered by the in-vehicle computer based on the proactive service policy may alternatively be first sending, to the user, a first voice instruction for determining whether to roll up the vehicle window. For example, the first voice instruction may be "The driver's side vehicle window is not rolled up yet. Do you want to automatically roll up the vehicle window for you". Then, if the first voice reply instruction sent by the user for the first voice instruction is "Yes", the in-vehicle computer may control, by performing semantic analysis on the first voice reply instruction, to roll up all vehicle windows on the vehicle. The in-vehicle computer continues to send, to the user, a second voice instruction for prompting the user to take the mobile phone. For example, the second voice instruction may be "A process of automatically rolling up a vehicle window has been started" and "Remember to take your mobile phone". It may be understood that the in-vehicle computer may provide a proactive service for the hybrid recognition scenario for the user by using a plurality of rounds of conversions. FIG. 7 is a diagram of still another display interface of the voice interaction control method in the get-off scenario according to an embodiment of this application. (a) in FIG. 7 shows prompt content provided by the in-vehicle computer based on the proactive service policy. (b) in FIG. 7 shows a possible first voice reply instruction of the user. (c) in FIG. 7 shows second-turn voice prompt content provided by the in-vehicle computer based on the proactive service policy and the first voice reply instruction.

Based on the descriptions of the application scenarios that may be applied to embodiments of this application, it may be learned that a design idea of the method provided in embodiments of this application is as follows: When it is detected that the user is in the get-off scenario, if one or more recognition scenarios are detected or determined, a corresponding proactive service may be provided for the user based on a proactive service control policy corresponding to the one or more recognition scenarios, so that the user can leave the vehicle and does not need to return to the vehicle to perform a manual operation, thereby saving time and energy of the user and providing convenience for the user.

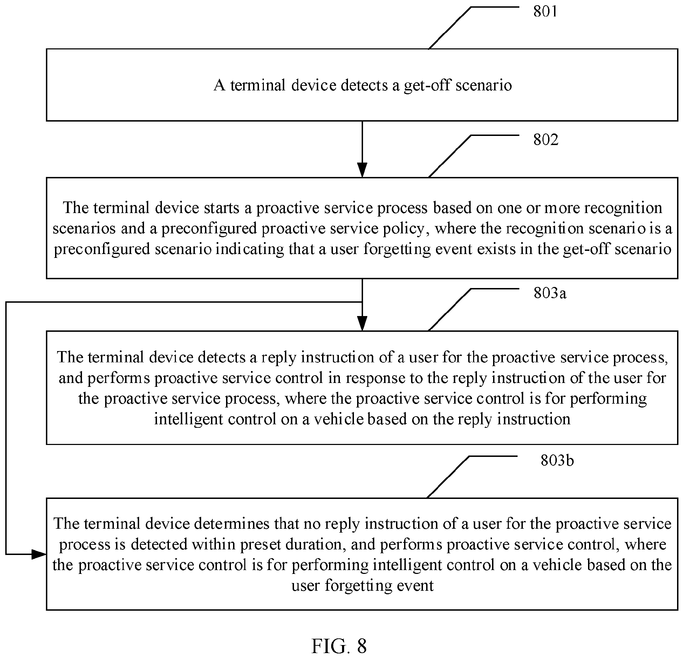

FIG. 8 is a schematic flowchart of interaction of a proactive service method for a get-off scenario according to an embodiment of this application. In the following embodiments, a terminal device is still described as an in-vehicle computer used as an execution body, but is not limited to the in-vehicle computer.

**Step 801: The terminal device detects the get-off scenario.**

In an optional embodiment, after detecting the get-off scenario, the terminal device may obtain one or more recognition scenarios. The recognition scenario is a preconfigured scenario indicating that a user forgetting event exists in the get-off scenario.

In this embodiment of this application, if it is detected that a user shifts to a P gear, it is detected, via a pressure sensor at a driver's position, that the user leaves the driver's position, it is detected that the user opens a driver's side vehicle door, or the like, it may be determined that the user is detected to be in the get-off scenario. In this case, the in-vehicle computer may further detect, based on that the user is in the get-off scenario, whether there is a recognition scenario. The recognition scenario may be a prestored type of a recognition scenario, for example, may be but is not limited to the scenario in which a vehicle window is forgotten to be rolled up, the scenario in which a mobile phone or a child is forgotten, the hybrid recognition scenario of a plurality of recognition scenarios, or the like described in the foregoing embodiments.

In addition, currently, a vehicle usually includes a trigger switch of "Automatically roll up a window when a user leaves and locks the vehicle". In an optional embodiment, a trigger condition of this embodiment of this application may be a scenario in which the user does not turn on the trigger switch. For example, if the in-vehicle computer detects that the trigger switch is turned on, a method process provided in this application is not triggered, or a process of recognizing the scenario in which a vehicle window is forgotten to be rolled up is not triggered. For another example, if the in-vehicle computer detects that the trigger switch is not turned on, a method process provided in this application is triggered, or a process of recognizing the scenario in which a vehicle window is forgotten to be rolled up is triggered. In another optional embodiment, when obtaining the recognition scenario, the terminal device determines whether the trigger switch of "Automatically roll up a window when a user leaves and locks the vehicle" is turned on. If the trigger switch is turned on, the terminal device does not start a proactive service process for the scenario in which a vehicle window is forgotten to be rolled up; or if the trigger switch is not turned on, the terminal device starts a proactive service process for the scenario in which a vehicle window is forgotten to be rolled up. It should be noted that, if the proactive service process for the scenario in which a vehicle window is forgotten to be rolled up is not started, start of a proactive service process for another recognition scenario may not be affected.

During implementation of this application, for an implementation process in which the in-vehicle computer obtains the one or more recognition scenarios, refer to the foregoing descriptions of various scenarios. Details are not described herein again.

**Step 802: The terminal device starts a proactive service process based on the one or more recognition scenarios and a preconfigured proactive service policy.**

The proactive service policy may be prestored in the in-vehicle computer. In addition, when the hybrid recognition scenario including the plurality of recognition scenarios is detected, if a proactive service policy preconfigured for the hybrid recognition scenario is stored, the proactive service process may be started based on the preconfigured proactive service policy; or if a proactive service policy preconfigured for a hybrid recognition scenario corresponding to at least two of the plurality of recognition scenarios is stored, the proactive service process may be started based on one or more preconfigured proactive service policies; or if a proactive service policy preconfigured for the hybrid recognition scenario is not stored, the proactive service process may be started based on one or more proactive service policies included in the hybrid recognition scenario. For example, a plurality of proactive service processes may be sequentially started based on proactive service policies of recognition scenarios included in the hybrid recognition scenario. Optionally, proactive services may be provided in a predefined order. For example, a proactive service for the scenario in which a vehicle window is forgotten to be rolled up may be first provided, and then a proactive service for the scenario in which a mobile phone is forgotten is provided. During implementation of this application, after the one or more recognition scenarios existing in the get-off scenario are determined, one or more proactive service policies corresponding to the recognition scenario may be obtained; and then, a proactive service in at least one of the following manners: voice interaction control and prompt interface display, is provided for the user based on each proactive service policy.

**Step 803a: The terminal device detects a reply instruction of the user for the proactive service process, and performs proactive service control in response to the reply instruction of the user for the proactive service process, where the proactive service control is for performing intelligent control on the vehicle based on the reply instruction.**

For example, if the in-vehicle computer provides a proactive service through voice interaction control, the proactive service may be implemented in a multi-turn conversion manner. Optionally, the in-vehicle computer may query, in a first turn of conversion, whether the user needs to be provided with a proactive service, and receive a voice reply instruction of the user. If the proactive service can be completed based on the first turn of conversion, the proactive service may be ended after a control process is executed. If the proactive service cannot be completed based on the first turn of conversion, a second turn of conversion may continue to be started until the proactive service can be completed. For another example, the proactive service control is further for performing proactive service control on another event based on the reply instruction of the user. For example, the another event may not belong to events corresponding to the recognition scenario, and may be that the user queries weather from the terminal device or controls another vehicle component.

During implementation of this application, the in-vehicle computer may alternatively implement the proactive service based on a vertical field (vertical field) technology. When the proactive service process is started, the in-vehicle computer may determine that the voice reply instruction of the user belongs to a proactive service vertical field, and further obtain different type vertical fields through classification based on semantic analysis on the voice reply instruction of the user (where for example, the type vertical fields may include a vehicle control vertical field, a music vertical field, a weather vertical field, and a chat vertical field). For example, if the voice reply instruction of the user is "Roll up all vehicle windows" when the proactive service process is started, it may be determined that corresponding vertical fields are the proactive service vertical field and the vehicle control vertical field. For another example, if the voice reply instruction of the user is "Roll up all vehicle windows" and "What is the weather today" when the proactive service process is started, it may be determined that corresponding vertical fields are the proactive service vertical field, the vehicle control vertical field, and the weather vertical field. In this way, the in-vehicle computer may provide different proactive service policies based on determined vertical fields. It may be understood that, if the proactive service process is not started, and the voice instruction of the user is received in this case, different type vertical fields may be directly obtained through classification based on the voice instruction; and then, the voice instruction of the user may be responded to based on the different type vertical fields, without a need to provide a proactive service.

**Step 803b: The terminal device determines that no reply instruction of the user for the proactive service process is detected within preset duration, and performs proactive service control, where the proactive service control is for performing intelligent control on the vehicle based on the user forgetting event.**

For example, if the in-vehicle computer does not receive the voice reply instruction of the user or a user operation on a prompt interface within the preset duration, the in-vehicle computer may perform the proactive service control based on a default configuration. Optionally, the proactive service control corresponding to the default configuration may be, for example, rolling up a vehicle window by default, or maintaining a status of the vehicle window by default.

In an optional embodiment, the terminal device may alternatively perform different proactive service control based on a type of the get-off scenario. For example, the type of the get-off scenario may include a long-term leave scenario and a short-term get-off scenario. Optionally, in the long-term leave scenario, the proactive service control may be performed based on step 803b. It may be understood that even if the user does not send the reply instruction, the terminal device may still perform the proactive service control by default, to avoid a potential security risk for the user. Alternatively, optionally, in the short-term get-off scenario, the proactive service control may be performed based on step 803a. It may be understood that, in this scenario, the terminal device performs the proactive service control on the vehicle based on a requirement of the user, to avoid interference to the user.

In addition, if the in-vehicle computer does not receive a first voice reply instruction of the user or the user operation on the prompt interface in the proactive service process after sending a first voice instruction or displaying the prompt interface, the in-vehicle computer may collect statistics on an event in which the user does not reply; and if a quantity of times the user does not reply reaches a preset quantity-of-times threshold (for example, 3), the proactive service may be stopped, or the proactive service may be disabled for a preset quantity of days (for example, 30 days). In this way, when it is recognized that the user does not need the proactive service, the user may not be reminded anymore or not be reminded in short time, thereby avoiding bringing poor user experience to the user.

According to the method provided in this embodiment of this application, intelligent control on the vehicle after a recognition scenario is detected can be implemented based on the proactive service through interaction with the user, so that the user does not need to perform a manual operation or return to the vehicle to perform an operation. This can save time and energy of the user, and provide convenience for the user. In addition, different proactive service policies may be provided for different recognition scenarios, so that differentiated and diversified control can be implemented, and vehicle use experience of the user can be improved.

Based on a same inventive concept, an embodiment of this application further provides a terminal device. The terminal device may include functional modules such as a sensing module, a decision module, a voice assistant, and a conversion management engine. For example, the terminal device may be the in-vehicle computer in the foregoing embodiments. The plurality of functional modules interact with each other, to implement functions performed by the terminal device in the methods described in embodiments of this application. For example, step 801 to step 803a performed by the terminal device in the embodiment shown in FIG. 8 are performed, or step 801 to step 803b performed by the terminal device in the embodiment shown in FIG. 8 are performed. The plurality of functional modules may be implemented based on software, hardware, or a combination of software and hardware, and the plurality of functional modules may be randomly combined or divided based on a specific implementation. It should be noted that, in embodiments of this application, division into modules is an example, and is merely logical function division. In actual implementation, another division manner may be used. For example, a plurality of units or components may be combined or integrated into another system, or some features may be ignored or not performed. In addition, functional modules in embodiments of this application may be integrated into one processing unit, each of the units may exist alone physically, or two or more units are integrated into one unit. The integrated unit may be implemented in a form of hardware, or may be implemented in a form of a software functional module. For example, the plurality of functional modules included in the apparatus may be pre-integrated into the processing unit by using one compressed package, or may be pre-integrated into the processing unit by using a plurality of compressed packages.

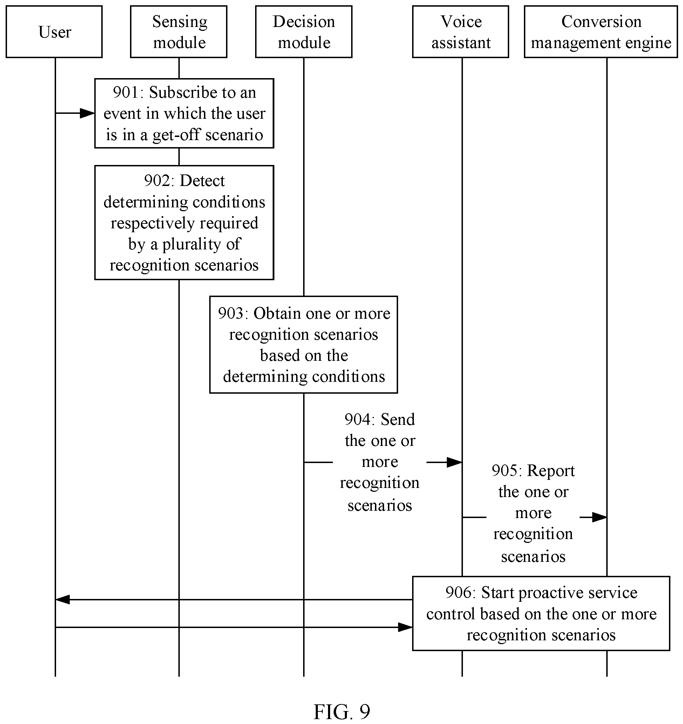

With reference to the plurality of functional modules included in the apparatus, FIG. 9 is a schematic flowchart of interaction of a proactive service method for a get-off scenario according to an embodiment of this application.

Step 901: The sensing module is configured to subscribe to an event in which a user is in a get-off scenario. Optionally, when the sensing module subscribes to that the user is in the get-off scenario, the sensing module may further obtain at least one piece of the following information: positioning information of a vehicle, detection information of a bound terminal device, time information, and the like; and then may further determine a type of the get-off scenario, for example, a long-term leave scenario or a short-term get-off scenario.

Step 902: The sensing module is further configured to detect determining conditions respectively required by a plurality of recognition scenarios. A scenario in which a vehicle window is forgotten to be rolled up is used as an example. The sensing module may sense a vehicle window status, to obtain a determining condition for determining whether the scenario in which a vehicle window is forgotten to be rolled up is met.

Step 903: The decision module is configured to obtain one or more recognition scenarios based on the determining condition. The scenario in which a vehicle window is forgotten to be rolled up is still used as an example. The decision module determines, based on the determining condition obtained by the sensing module, that the scenario in which a vehicle window is forgotten to be rolled up is recognized if it is determined that the determining condition meets the scenario in which a vehicle window is forgotten to be rolled up. Conversely, if it is determined that the determining condition does not meet the scenario in which a vehicle window is forgotten to be rolled up, the decision module determines that the scenario in which a vehicle window is forgotten to be rolled up is not recognized.

In addition, the decision module may be further configured to determine a proactive service policy based on the one or more recognition scenarios. Different proactive service policies may provide different voice interaction control or display different prompt interfaces, or the like. For example, content of the provided first voice instruction may be different.

Step 904: The decision module is further configured to send the one or more recognition scenarios to the voice assistant.

Step 905: The voice assistant is configured to report the one or more recognition scenarios to the conversion management engine.

Step 906: The voice assistant is further configured to provide voice interaction for the user based on processing of the conversion management engine. The conversion management engine may determine different voice instructions based on the proactive service policy determined by the decision module; and may further receive a voice reply instruction of the user, and perform voice analysis on the voice reply instruction in response to the voice reply instruction of the user; and then continue a next turn of conversion or perform corresponding control on the vehicle. For a specific implementation, refer to the foregoing described scenario content. Details are not described herein again.

In another optional embodiment, an embodiment of this application provides a terminal device. The terminal device may include a sensing module and a decision module. In addition, an embodiment of this application further provides a bound terminal device. The bound terminal device may include a voice assistant and a conversion management engine.

In still another optional embodiment, an embodiment of this application provides a proactive service system for a get-off scenario. The system includes the terminal device and at least one bound terminal device.

Based on the foregoing embodiments, this application further provides a terminal device. The terminal device includes at least one processor and at least one memory. The at least one memory stores computer program instructions. When the terminal device runs, the at least one processor performs functions performed by the terminal device in the methods described in embodiments of this application. For example, step 801 to step 803a performed by the terminal device in the embodiment shown in FIG. 8 are performed, or step 801 to step 803b performed by the terminal device in the embodiment shown in FIG. 8 are performed.

Based on the foregoing embodiments, this application further provides a proactive service system for a get-off scenario. The system includes the terminal device and the bound terminal device in the foregoing embodiments.

Based on the foregoing embodiments, this application further provides a computer program product. The computer program product includes a computer program (which may also be referred to as code or instructions). When the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory. The memory is configured to store a program and data that are necessary for the computer apparatus. The chip system may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. In this way, this application is intended to cover these modifications and variations of this application provided that these modifications and variations fall within the scope of the claims of this application and equivalent technologies thereof.

## Claims

1. A proactive service method for a get-off scenario, comprising:
detecting, by a terminal device, the get-off scenario;
starting, by the terminal device, a proactive service process based on one or more recognition scenarios and a preconfigured proactive service policy, wherein the recognition scenario is a preconfigured scenario indicating that a user forgetting event exists in the get-off scenario; and
detecting, by the terminal device, a reply instruction of a user for the proactive service process, and performing proactive service control in response to the reply instruction of the user for the proactive service process, wherein the proactive service control is for performing intelligent control on a vehicle based on the reply instruction; or
determining, by the terminal device, that no reply instruction of a user for the proactive service process is detected within preset duration, and performing proactive service control, wherein the proactive service control is for performing intelligent control on a vehicle based on the user forgetting event.

2. The method according to claim 1, wherein the starting, by the terminal device, a proactive service process comprises at least one of the following processes:
starting, by the terminal device, a voice interaction process with the user; and
displaying, by the terminal device, a prompt interface.

3. The method according to claim 2, wherein the detecting, by the terminal device, a reply instruction of a user for the proactive service process comprises:
detecting, by the terminal device, a voice reply instruction of the user for the proactive service process; or
detecting, by the terminal device, a user operation instruction of the user for the proactive service process on the prompt interface.

4. The method according to claim 2 or 3, wherein if the proactive service process is the voice interaction process, the starting, by the terminal device, a voice interaction process with the user comprises:
performing, by the terminal device, voice interaction with the user based on a multi-turn conversion technology.

5. The method according to any one of claims 1 to 4, wherein the starting, by the terminal device, a proactive service process based on a plurality of recognition scenarios and a preconfigured proactive service policy comprises:
obtaining, from the preconfigured proactive service policy, one or more proactive service policies corresponding to the plurality of recognition scenarios; and
starting the proactive service process based on the one or more proactive service policies.

6. The method according to any one of claims 1 to 5, wherein after the detecting, by a terminal device, the get-off scenario, the method further comprises:
determining, by the terminal device, a type of the get-off scenario, wherein the type of the get-off scenario comprises a long-term leave scenario and a short-term get-off scenario; and
the starting, by the terminal device, a proactive service process based on one or more recognition scenarios and a preconfigured proactive service policy comprises:
starting, by the terminal device, the proactive service process based on the type of the get-off scenario, the one or more recognition scenarios, and the preconfigured proactive service policy, wherein a same recognition scenario corresponds to different proactive service policies in different types of the get-off scenario.

7. The method according to claim 6, wherein the determining, by the terminal device, that no reply instruction of a user for the proactive service process is detected within preset duration, and performing proactive service control comprises:
when the type of the get-off scenario is the long-term leave scenario, determining, by the terminal device, that no reply instruction of the user for the proactive service process is detected within the preset duration, and performing the proactive service control.

8. The method according to claim 6, wherein the detecting, by the terminal device, a reply instruction of a user for the proactive service process, and performing proactive service control in response to the reply instruction of the user for the proactive service process comprises:
when the type of the get-off scenario is the short-term get-off scenario, detecting, by the terminal device, the reply instruction of the user for the proactive service process, and performing the proactive service control in response to the reply instruction of the user for the proactive service process.

9. The method according to any one of claims 1 to 8, wherein the method further comprises:
if no reply instruction of the user for the proactive service process is detected by the terminal device, accumulating a quantity of times of no reply; and
if the terminal device determines that the quantity of times of no reply is greater than or equal to a preset quantity-of-times threshold, determining not to start the proactive service process anymore, or not to start the proactive service process anymore within preset time.

10. The method according to any one of claims 1 to 9, wherein the recognition scenario is a scenario in which a vehicle window is forgotten to be rolled up, a scenario in which a trunk is forgotten to be closed down, or a scenario in which a vehicle light is forgotten to be turned off.

11. The method according to any one of claims 1 to 10, wherein the one or more recognition scenarios comprise the scenario in which a vehicle window is forgotten to be rolled up, and the performing, by the terminal device, proactive service control comprises:
rolling up, by the terminal device, an open vehicle window of the vehicle; or
rolling up, by the terminal device, a specified vehicle window of the vehicle in response to the reply instruction.

12. The method according to any one of claims 1 to 11, wherein the one or more recognition scenarios comprise the scenario in which a vehicle window is forgotten to be rolled up, and the starting, by the terminal device, a proactive service process based on one or more recognition scenarios and a preconfigured proactive service policy comprises:
when the vehicle does not turn on a trigger switch for automatically rolling up a window, starting, by the terminal device, the proactive service process based on the scenario in which a vehicle window is forgotten to be rolled up and the preconfigured proactive service policy.

13. The method according to any one of claims 1 to 12, wherein the terminal device is an in-vehicle computer on the vehicle or a terminal device bound to the vehicle.

14. A terminal device, comprising one or more processors and one or more memories, wherein
the one or more memories are configured to store one or more computer programs and data information, wherein the one or more computer programs comprise instructions; and
when the instructions are executed by the one or more processors, the terminal device is enabled to perform the method performed by the terminal device according to any one of claims 1 to 13.

15. A computer-readable storage medium, wherein the computer-readable storage medium is configured to store a computer program; and when the computer program is run on a computer, the computer is enabled to perform the method according to any one of claims 1 to 13.

16. A computer program product, comprising a computer program, wherein when the computer program is run on a computer, the computer is enabled to perform the method according to any one of claims 1 to 13.

17. A graphical user interface on a terminal device, wherein the terminal device has a display, one or more memories, and one or more processors, the one or more processors are configured to execute one or more computer programs stored in the one or more memories, and the graphical user interface comprises a graphical user interface displayed when the terminal device performs the method according to any one of claims 1 to 13.
